# EUROPÄISCHE PATENTSCHRIFT

(11) **EP 3 491 274 B1**
(45) Veröffentlichungstag und Bekanntmachung des Hinweises auf die Patenterteilung: **02.09.2020**
(21) Anmeldenummer: 17742739.0
(22) Anmeldetag: 21.07.2017
(51) Int. Cl.: F16J 15/10

(54) **DICHTUNGSELEMENT**
SEALING ELEMENT
ÉLÉMENT D'ÉTANCHÉITÉ

(30) Priorität: 28.07.2016 DE 102016213899
(43) Veröffentlichungstag der Anmeldung: 05.06.2019
(73) Patentinhaber: Mahle International GmbH, 70376 Stuttgart (DE)
(72) Erfinder: STEHLIG, Jürgen, 72654 Neckartenzlingen (DE); GUITON, Pierre-Yves, 73773 Aichwald (DE)
(74) Vertreter: BRP Renaud & Partner mbB Rechtsanwälte Patentanwälte Steuerberater
(86) Internationale Anmeldenummer: PCT/EP2017/068496
(87) Internationale Veröffentlichungsnummer: WO 2018/019722

(56) Entgegenhaltungen:
- WO-A1-2015/069829
- DE-A1-102012 205 002
- US-A1- 2008 197 578

## Beschreibung

Die vorliegende Erfindung betrifft ein Dichtungselement zum Abdichten von Fahrzeugbauteilen eines Kraftfahrzeuges gemäß dem Oberbegriff des Anspruchs 1. Bei der Abdichtung von Fahrzeugbauteilen, die zumindest zwei Fahrzeugbauteilkomponenten aufweisen, beispielsweise ein Gehäuse und einen Deckel, kommen bekanntermaßen Dichtungselemente, oftmals hergestellt aus Polymer-Werkstoffen, zum Einsatz. Polymere sind wie alle organisch-chemischen Werkstoffe in Folge von Umwelteinflüssen, durch Kontakt mit unterschiedlichen Medien, Sauerstoff oder Ozon wie auch Druck oder Temperatur nicht uneingeschränkt verwendbar. Durch solche Umwelteinflüsse verändern sich die Materialeigenschaften der Polymere und haben damit einen direkten Einfluss auf das Dichtverhalten der Dichtungselemente. Insbesondere bei der Anwendung derartiger Dichtungselemente bei Fahrzeugbauteilen von Kraftfahrzeugen ist eine hohe chemische Beständigkeit der Polymere gegenüber Ölen, Kraftstoffen und Säuren und zudem eine gute Temperaturbeständigkeit erforderlich.

Aus dem Stand der Technik sind Dichtungselemente, die aus polymeren Werkstoffen gefertigt sind, allgemein bekannt.

Die DE 20 2011 108 992 U1 offenbart ein Dichtungselement, das aus einem fluorhaltigen Polymer, insbesondere aus einem gefüllten oder einem ungefüllten Polytetrafluorethylen (PTFE), hergestellt ist. Das Dichtungselement ist hierbei als eine geschlossene Ringdichtung ausgestaltet. Weiter weist das Dichtungselement zwei in Umfangsrichtung verlaufende, radial benachbarte Zonen auf, in denen ein Dichtungsmaterial eine unterschiedliche Dichte aufweist, sodass das Dichtungsmaterial ein nicht konstantes Dichteprofil in einem Querschnitts im wesentlichen senkrecht zur Umfangsrichtung aufweist. Die mindestens zwei in Umfangsrichtung verlaufenden Zonen grenzen dabei jeweils radial aneinander und erstrecken sich insbesondere über die gesamte axiale Dicke des Dichtungselementes.

Die DE 20 2011 108 989 U1 offenbart ebenfalls ein als eine geschlossene Ringdichtung ausgestaltetes Dichtungselement, das aus einem fluorhaltigen Polymer, insbesondere aus einem gefüllten oder einem ungefüllten Polytetrafluorethylen (PTFE), hergestellt ist. Ein Dichtungsmaterial des Dichtungselementes weist hierbei einen nicht-konstanten Dichteverlauf bezüglich eines Querschnitts im Wesentlichen senkrecht zu einer Umfangsrichtung des Dichtungselementes auf. Der Dichteprofilverlauf des Dichtungselementes ist als fließender Übergang zwischen einem Innenbereich und einem Außenbereich der Ringdichtung zu beschreiben.

Die gattungsbildende WO 2015/069829 A1 offenbart ein Dichtelement mit zwei Bereichen, die aus Werkstoffen mit unterschiedlicher chemischer Beständigkeit gebildet ist. Diese Bereiche schließen sich aneinander an und sind jeweils einem Innenbereich und einem Außenbereich zugewandt. Hier werden unter anderem Werkstoffe wie Fluorkautschuk (FKM) für den einen Bereich und Acrylat-Kautschuk (AEM) und Polyacrylat-Kautschuk (ACM) für den anderen Bereich genannt. Die DE 10 2012 205 002 A1 offenbart eine elastomere Dichtung, deren chemische Eigenschaften durch ein weiteres Werkstoff erhöht sind. Dadurch weist die Dichtung zwei Bereiche auf, die aus Werkstoffen mit unterschiedlicher chemischer Beständigkeit gebildet sind. Die US 2008/0197578 A1 offenbart eine weitere Dichtung aus zwei Werkstoffen, die in ihren chemischen Eigenschaften unterschiedlich sein können. Der eine Bereich ist dabei C-förmig ausgebildet und der zweite bereichsweise kreisrunde Bereich ist teilweise in dem C-förmigen Bereich angeordnet.

Der vorliegenden Erfindung liegt die Aufgabe zugrunde, eine verbesserte oder zumindest andere Ausführungsform eines Dichtungselementes zum Abdichten von Fahrzeugbauteilen bereitzustellen, die sich insbesondere durch eine vorteilhafte Ausgestaltung des Dichtungselementes auszeichnet und zudem kostengünstig zu fertigen ist.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, dass ein Dichtungselement zumindest einen ersten Bereich, der vollständig und ausschließlich aus einem ersten Werkstoff besteht und zumindest einen zweiten Bereich aufweist, der vollständig und ausschließlich aus einem zweiten Werkstoff besteht, wobei der zweite Werkstoff eine höhere chemische Beständigkeit als der erste Werkstoff aufweist. Eine derartige Ausgestaltung stellt eine bedarfsgerechte Anordnung von Werkstoffen mit unterschiedlichen Werkstoffeigenschaften in unterschiedlichen Bereichen in einem Dichtungselement dar. Vorzugsweise besteht das Dichtungselement ausschließlich aus dem ersten Werkstoff und dem zweiten Werkstoff und besonders bevorzugt sind die Werkstoffe ausschließlich Polymerwerkstoffe. Kern der Erfindung ist es, dass lediglich die Bereiche, im Folgenden zweiter Bereich genannt, in einem Dichtungselement den zweiten Werkstoff aufweisen, welche im vorgesehenen Einsatz des Dichtungselementes in direktem Kontakt mit chemisch aggressiven Medien stehen. Die Bereiche, im Folgenden erster Bereich genannt, in einem Dichtungselement, bei denen in der vorbestimmten Verwendung kein unmittelbarer Kontakt mit chemisch aggressiven Medien besteht, sind aus einem kostengünstigeren ersten Werkstoff gebildet, der eine niedrigere Beständigkeit gegen chemisch aggressive Medien aufweist. Insbesondere bei Fahrzeugbauteilen ist eine chemische Beständigkeit gegenüber Medien, wie Ölen, Kraftstoffen oder Säuren erforderlich, welche aber zumeist lediglich mit einer geringen Fläche des Dichtungselementes in Kontakt stehen. Es ist klar, dass die weniger aggressiven Medien, wie z.B. Schmieröl, sich im Betrieb mit aggressiveren Medien, wie z.B. Krafstoff, vermischen können und dadurch aggessiver werden. Zweckmäßig ist daher eine Ausgestaltung des Dichtungselementes mit zumindest zwei Bereichen, wobei in der vorbestimmten Verwendung des Dichtungselementes ausschließlich der zweite Bereich mit den zuvor beschriebenen aggressiven bzw. aggressiveren Medien in Verbindung steht.

In einer vorteilhaftigen Ausführungsform grenzen der erste Bereich und der zweite Bereich direkt aneinander bzw. sind unmittelbar miteinander verbunden und bilden Zusammen das Dichtungselement als solches.

In einer vorteilhaftigen Ausführungsform ist der zweite Werkstoff im zweiten Bereich, insbesondere aus der Gruppe Fluorsilicon-Kautschuk (FVMQ), Fluorkautschuk (FKM) und Hydrierter Acrylnitril-Butadien-Kautschuk (HNBR) ausgewählt. Der erste Werkstoff im ersten Bereich ist insbesondere aus der Gruppe Ethylen-Acrylat-Kautschuk (AEM), Polyacrylat-Kautschuk (ACM), Methyl-Vinyl-Silikon-Kautschuk (MVQ), Acrylnitirl-Butadien-Kautschuk (NBR) und Ethylen-Propylen-Dien-Kautschuk (EPDM) ausgewählt.

Es sei gesagt, dass sowohl für den ersten Werkstoff im ersten Bereich als auch für den zweiten Werkstoff im zweiten Bereich die Verwendung von gleichen Grundpolymeren denkbar ist, wobei erfindungswesentlich ist, dass das Grundpolymer des zweiten Werkstoffs im zweiten Bereich durch Zugabe von Additiven veredelt ist und somit den chemisch beständigeren zweiten Werkstoff im Gegensatz zum ersten Werkstoff bildet.

In einer weiteren vorteilhaften Ausführungsform ist das Dichtungselement als eine in Umfangsrichtung geschlossene Ringdichtung ausgeformt. Eine Innenkontur des Dichtungselementes, die einem vom als Ringdichtung ausgestalteten Dichtungselement eingefassten Innenbereich zugewandt ist, ist in einem ersten Fall durch den ersten Bereich und in einem zweiten Fall durch den zweiten Bereich gebildet. Eine vom Innenbereich abgewandte Außenkontur des Dichtungselementes ist im ersten Fall durch den zweiten Bereich und im zweiten Fall den ersten Bereich gebildet. Insbesondere bei der Abdichtung von Fahrzeugbauteilen ist es üblich, dass Dichtungselemente entweder in dem Innenbereich oder in dem Außenbereich einem chemisch aggressiven Medium ausgesetzt sind. Beispielsweise bei einer Ölwanne zum Auffangen von Ölen liegt die chemisch aggressive Seite an der Innenkontur des Dichtungselementes vor. Erfindungsgemäß weist die Innenkontur des Dichtungselementes in diesem Fall den zweiten Bereich mit dem chemisch beständigeren zweiten Werkstoff auf, wohingegen die Außenkontur aus dem ersten Bereich mit dem weniger chemisch beständigen ersten Werkstoff gebildet ist.

Der Längsrichtung des Dichtungselementes erstreckt sich bei geschlossener Bauweise des Dichtungselement in der Umgangsrichtung und bei nicht-geschlossener oder offener Bauweise des Dichtungselementes von dem einen Ende zum anderen Ende des Dichtungselementes.

In einer vorteilhaften Ausführungsvariante weist das Dichtungselement in einem senkrecht zur Längsrichtung verlaufenden Querschnittsprofil an jeder Stelle in Längsrichtung des Dichtungselementes den ersten Bereich und den zweiten Bereich auf.

In einer anderen Ausführungsvariante weist das Dichtungselement zumindest einen Längsabschnitt auf, der ausschließlich aus dem ersten Werkstoff des ersten Bereiches oder dem zweiten Werkstoff des zweiten Bereiches gebildet ist. Bevorzugt weist das Dichtungselement an Fahrzeugbauteilen, die Blowby-Stellen aufweisen, einen Längsabschnitt auf, der ausschließlich aus dem zweiten Werkstoff des zweiten Bereiches gebildet ist. Blowby-Stellen sind solche Stellen bei Fahrzeugbauteilen, an denen bei einer Kompression Gase vorbeistreifen, die ein Dichtungselement in diesem Bereich besonders stark belasten. Zweckmäßig sind Stellen an Fahrzeugbauteilen, die weniger beziehungsweise überhaupt nicht belastet sind, bevorzugt durch Längsabschnitte des Dichtungselementes aus dem ersten Bereich mit dem ersten Werkstoff gebildet.

Vorteilhafterweise sind der erste und der zweite Bereich im Querschnittsprofil des Dichtungselementes zumindest teilweise in Längsrichtung spiegelsymmetrisch ausgeformt. Das heißt, dass der erste Bereich und der zweite Bereiche unmittelbar in Kontakt stehen, zu gleichen Teilen im Dichtungselement angeordnet sind und sie das vollständige Querschnittsprofil des Dichtungselementes bilden.

In einer nicht erfindungsgemäßen Ausführungsvariante verläuft die Verteilung des ersten Bereiches und des zweiten Bereiches im Querschnittsprofil des Dichtungselementes in Längsrichtung konstant. Die konstante Verteilung stellt aus fertigungstechnischer Sicht einen einfachen Herstellungsprozess dar.

Erfindungsgemäß verläuft die Verteilung des ersten Bereiches und des zweiten Bereiches im Querschnittsprofil des Dichtungselementes in Längsrichtung variabel. Diese Ausführungsvariante kann insbesondere bevorzugt bei Dichtungselementen zum Einsatz kommen, die örtlich ungleichmäßigen Belastungen ausgesetzt sind.

In einer vorteilhaften Ausführungsform der erfindungsgemäßen Idee weist das Dichtungselement Dichtkonturen, beispielsweise in Form von Dichtlippen, wulstartigen Verdickungen oder Nasen auf. Die Dichtkonturen bilden einen Bestandteil des in Längsrichtung konstanten Querschnittsprofiles des Dichtungselementes. Zweckmäßig stehen die Dichtkonturen in Richtung der abzudichtenden Fahrzeugbauteilkomponenten hervor. Bevorzugt weist das Dichtungselement ein mit Radien versehenes, rechteckiges Querschnittsprofil auf, das zumindest eine orthogonal in Richtung eines abzudichtenden Bauteils angeordnete Nase aufweist, die sich in eine dafür komplementär ausgebildete Aussparung bzw. Nut an einer abzudichtenden Fahrzeugbauteilkomponente erstreckt. An dieser Nase können insbesondere bevorzugt zwei, jeweils in Richtung gegenüberliegender Mantelwände der Aussparung bzw. Nut der abzudichtenden Fahrzeugbauteilkomponente, wulstartige Verdickungen hervorstehen, die als Dichtkonturen zu bezeichnen sind und eine Abdichtung gewährleisten. Zweckmäßig kann das Dichtungselement an einer der Nase abgewandten Seite, also der anderen abzudichtenden Fahrzeugbauteilkomponente zugewandt, bevorzugt zwei Dichtlippen im Bereich der Nase aufweisen. Die Dichtlippen können sich ebenfalls in dafür komplementär vorgesehene Aussparungen bzw. Nuten einer zweiten abzudichtenden Fahrzeugbauteilkomponente erstrecken.

Sofern zumindest zwei Dichtkonturen vorgesehen sind, die an demselben Fahrzeugbauteil dichtend zur Anlage kommen sollen, sind sie zweckmäßig so angeordnet, dass sie in Reihe wirken.

Bei einer Ausführungsvariante, bei der das Dichtungselement als Ringdichtung ausgestalteten ist, dienen innere Dichtkonturen zur Abdichtung des Innenbereiches und äußere Dichtkonturen zur Abdichtung eines Außenbereiches. Bevorzugt verläuft eine Grenze zwischen dem ersten Bereich und dem zweiten Bereich im Querschnittsprofil des Dichtungselements, insbesondere zwischen den Dichtkonturen zur Abdichtung des Innenbereiches sowie den Dichtkonturen zur Abdichtung des Außenbereiches. Bei derartiger Anordnung der Bereiche kann sichergestellt werden, dass beispielsweise ein im Innern eines Fahrzeugbauteils befindliches chemisch aggressives Medium ausschließlich durch einen der Bereiche des Dichtungselementes abgedichtet wird und somit auch nur mit einem, zweckmäßig dem zweiten Werkstoff, in Kontakt kommt. Das heißt, dass jeweils eine wulstartige Verdickung zur Abdichtung einer ersten Fahrzeugbauteilkomponente und eine Dichtlippe zur Abdichtung einer zweiten Fahrzeugbauteilkomponente, zweckmäßig jeweils in Richtung des Innenbereiches und des Außenbereiches, aus einem der Bereiche und somit aus demselben Werkstoff gebildet sind. Der zweite Bereich mit dem medienbeständigen zweiten Werkstoff kann lokal auf die Flächen, an denen das Dichtungselement mit einem chemisch aggressiven Medium in Kontakt steht, in ein Werkzeug eingespritzt werden. Das Werkzeug kann teilweise geöffnet werden, um das Volumen für den ersten Bereich mit dem ersten Werkstoff freizugeben. Der erste Werkstoff kann ebenfalls in das Werkzeug eingespritzt werden. Die Verbindung des ersten Werkstoffs mit dem zweiten Werkstoff kann durch das chemisch-technische Verfahren der Vulkanisation ohne Zusatzstoffe erreicht werden. Ebenso stellt die Zugabe von zusätzlichen chemischen Komponenten, wie beispielsweise Vulkanisationsbeschleuniger, ein mögliches Herstellungsverfahren des Dichtungselementes dar.

Eine andere Ausführungsform sieht vor, dass zumindest ein solcher zweiter Bereich durch eine Folie gebildet ist, die außen am ersten Bereich angeordnet ist. Hierdurch lässt sich quasi eine Verbunddichtung aus zwei separat hergestellten Elementen herstellen. Alternativ kann der Werkstoff des ersten Bereichs an die zuvor hergestellte, den zweiten Bereich bildende Folie angespritzt sein. Eine solche Folie kann grundsätzlich aus Metall bzw. aus einer Metallegierung hergestellt sein. Ebenso lässt sich die Folie an den ersten Werkstoff des ersten Bereichs ankleben, anschweißen oder anvulkanisieren.

Eine weitere Ausführungsform sieht vor, dass zumindest ein solcher zweiter Bereich durch eine Beschichtung gebildet ist, die außen auf den ersten Bereich aufgebracht ist. Hierdurch wird nur ein Oberflächenabschnitt des ersten Werkstoffs mit dem zweiten Werkstoff versehen. Somit wird nur sehr wenig von dem teuren zweiten Werkstoff benötigt, um den zweiten Bereich zu bilden, wodurch sich das Dichtungselement vergleichsweise preiswert herstellen lässt. Die Beschichtung kann angespritzt oder mittels Elektroplattieren am ersten Bereich angebracht sein.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: ein Querschnittsprofil eines Dichtungselementes zum Abdichten eines Fahrzeugbauteils mit einem ersten Bereich und einem zweiten Bereich,
- Fig. 2: eine Draufsicht eines als Ringdichtung ausgestaltetes Dichtungselementes mit einem ersten und einem zweiten Bereich,
- Fig. 3: eine stark vereinfachte Darstellung einer Ringdichtung mit Längsabschnitten, die lediglich einen Bereich aufweisen,
- Fig. 4 - 8: jeweils ein Querschnittsprofil von Dichtungselementen mit unterschiedlichen Verteilungen des ersten Bereiches und des zweiten Bereiches,
- Fig. 9 - 10: jeweils ein Querschnittsprofil von Dichtungselementen anderer Ausführungsformen.

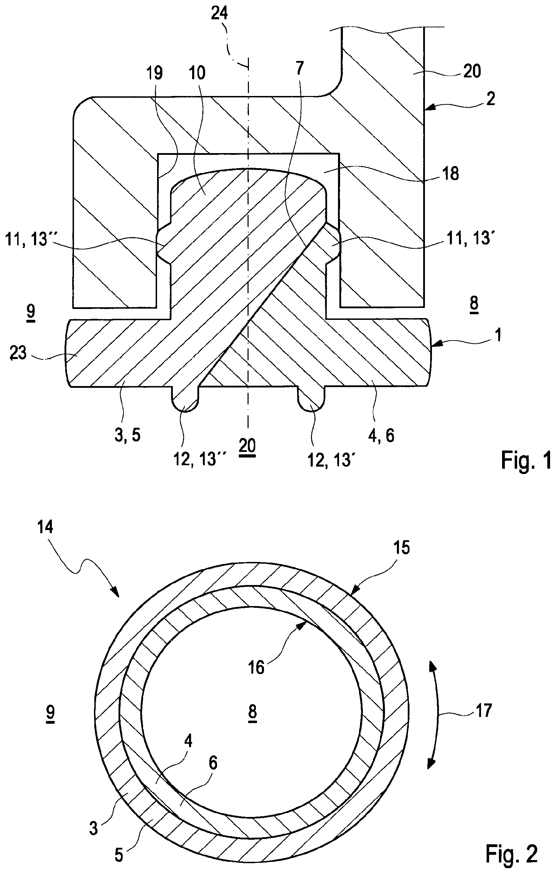

Fig.1 zeigt schematisch ein Querschnittsprofil eines Dichtungselementes 1, welches einen ersten Bereich 3 und einen zweiten Bereich 4 aufweist. Das Dichtungselement 1 ist in einem Fahrzeugbauteil 2 angeordnet und dichtet einen innerhalb des Fahrzeugbauteils 2 liegenden Innenbereich 8 von einem außerhalb des Fahrzeugbauteils 2 liegenden Außenbereich 9 ab. Das abzudichtende Fahrzeugbauteil 2 weist in der Regel zumindest zwei Fahrzeugbauteilkomponenten 20 auf, wobei im Übrigen in dieser Figur nur eine Fahrzeugbauteilkomponente 20 im oberen Bereich abgebildet ist. Der erste Bereich 3 des Dichtungselementes 1 ist aus einem ersten Werkstoff 5 und der zweite Bereich 4 aus einem zweiten Werkstoff 6 gebildet. Der erste Bereich 3 und der zweite Bereich 4 sind unmittelbar miteinander verbunden und weisen an ihren Kontaktflächen eine Grenze 7 auf. Gemeinsam bilden der erste Bereich 3 und der zweite Bereich 4 das Dichtungselement 1. Der zweite Werkstoff 6 im zweiten Bereich 4 weist eine höhere chemische Beständigkeit als der erste Werkstoff 5 im ersten Bereich 3 auf.

Das Dichtungselement 1 weist einen rechteckigen Grundkörper 23 im Querschnittsprofil auf, an dem eine orthogonal, in Richtung der Fahrzeugbauteilkomponente 20, hervorstehende Nase 10 angeordnet ist. Die Nase 10 erstreckt sich in eine komplementär dazu an der Fahrzeugbauteilkomponente 20 ausgestaltete Aussparung bzw. Nut 18. Zur fluidischen Abdichtung sind an dem Dichtungselement 1 Dichtkonturen 13 angeordnet, die in Richtung der abzudichtenden Fahrzeugbauteilkomponente 20 hervorstehen. Jeweils seitlich an der Nase 10 in Richtung einer Seitenwand 19 der Aussparung bzw. Nut 18 der Fahrzeugbauteilkomponente 20 stehen wulstartige Verdickungen 11, als Dichtkonturen 13 hervor und bilden eine fluidische Abdichtung zwischen dem Dichtungselement 1 und der Fahrzeugbauteilkomponente 20. An einer der Nase 10 abgewandten Seite, in Richtung einer zweiten abzudichtenden Fahrzeugbauteilkomponente 20, stehen zwei voneinander entfernte Dichtlippen 12 hervor. Rein exemplarisch können diese Dichtlippen 12 etwa vertikal unterhalb der wulstartigen Verdickungen 11 liegen.

Fig. 2 zeigt eine Draufsicht des Dichtungselementes 1 als eine in Umlaufrichtung 17 geschlossene Ringdichtung 14. Die Ringdichtung 14 weist eine Innenkontur 18 auf, die den Innenbereich 8 umschließt. Die Innenkontur 18 ist aus dem zweiten Bereich 4 mit dem zweiten Werkstoff 6 gebildet. Eine Außenkontur 15 der Ringdichtung 14 ist aus dem ersten Bereich 3 mit dem ersten Werkstoff 5 gebildet. Die Außenkontur 15 ist dem Außenbereich 9 zugewandt. Bei der Ausführungsvariante des Dichtungselementes 1 als Ringdichtung 14 trennt das Dichtungselement 1 somit den Außenbereich 9 vom Innenbereich 8 ab. Je nachdem welcher Bereich, also der Innenbereich 8 oder der Außenbereich 9, ein chemisch aggressives Medium aufweist, kann der zweite Bereich 4, der den chemisch beständigen zweiten Werkstoff 6 aufweist, entweder die Innenkontur 16 oder die Außenkontur 15 bilden. In den weiterführenden Ausführungsvarianten, die sich auf eine Verteilung der einzelnen Bereiche 3, 4 richtet, werden unter anderem auch Alternativen angegeben, bei denen in Längsabschnitten 21 sowohl ein Innenbereich 8 als auch ein Außenbereich 9, ein chemisch aggressives Medium aufweisen, sodass das Dichtungselement 1 in diesen Längsabschnitten 21 sowohl am Innenbereich8 als auch im Außenbereich 9 durch den zweiten Bereich 4 also dem zweiten Werkstoff 6 gebildet ist.

Das Dichtungselement 1 kann vorzugsweise im Querschnittsprofil an jeder Stelle in Umfangsrichtung 17 der Ringdichtung 14 den ersten Bereich 3 mit dem ersten Werkstoff 5 und den zweiten Bereich 4 mit dem zweiten Werkstoff 6 aufweisen. Die Verteilung des ersten Bereiches 3 mit dem ersten Werkstoff 5 und des zweiten Bereiches 4 mit dem zweiten Werkstoff 6 kann im Querschnittsprofil des Dichtungselementes 1 als Ringdichtung 14 bei einer nicht erfindungsgemäßen Ausführungsvariante in Umfangsrichtung 17 konstant und bei der erfindungsgemäßen Ausführungsvariante in Umfangsrichtung 17 variabel verlaufen. Das heißt, dass bei einem variablen Verlauf an mehr- oder minderbelasteten Stellen die Verteilung der einzelnen Bereiche 3, 4 variieren kann. An chemisch stark beanspruchten Stellen kann der zweite Bereich 4 mit dem zweiten Werkstoff 6 ausgeprägter ausgeformt sein als der erste Bereich 3 mit dem ersten Werkstoff 5. Bei weniger stark beanspruchten Stellen kann der dahingehend der erste Bereich 3 mit dem ersten Werkstoff 5 stärker als der zweite Bereich 4 mit dem zweiten Werkstoff 6 ausgeprägt sein. Gleiches gilt bei der Ausführungsform als ein nicht geschlossenes Dichtungselement 1, wobei der erste Bereich 3 und der zweite Bereich 4 ebenfalls bei nicht erfindungsgemäßen Ausführungsvariante konstant oder bei erfindungsgemäßen Ausführungsvariante variabel in Längsrichtung des Dichtungselementes 1 verlaufen können.

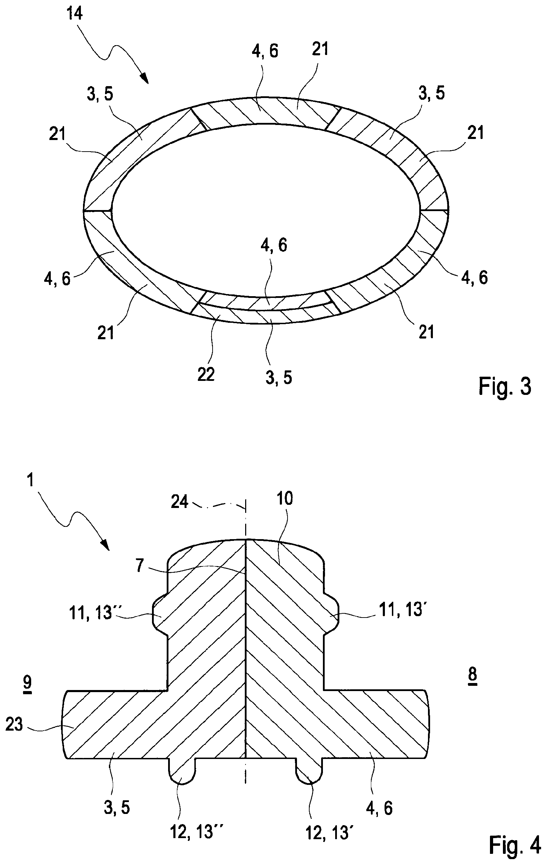

Fig. 3 zeigt eine stark vereinfachte Darstellung eines als Ringdichtung 14 ausgeformten Dichtungselementes 1, das Längsabschnitte 21 aufweist, die jeweils ausschließlich aus dem ersten Bereich 3 mit dem ersten Werkstoff 5 oder dem zweiten Bereich 4 mit dem zweiten Werkstoff 6 gebildet sind. Ein weiterer Längsabschnitt 22 weist sowohl den ersten Bereich 3 mit dem ersten Werkstoff 5 und den zweiten Bereich 4 mit dem zweiten Werkstoff 6 auf. Der Längsabschnitt 22 soll verdeutlichen, dass die Längsabschnitte 21, 22 lediglich einen Bereich als auch beide Bereiche 3, 4 aufweisen können.

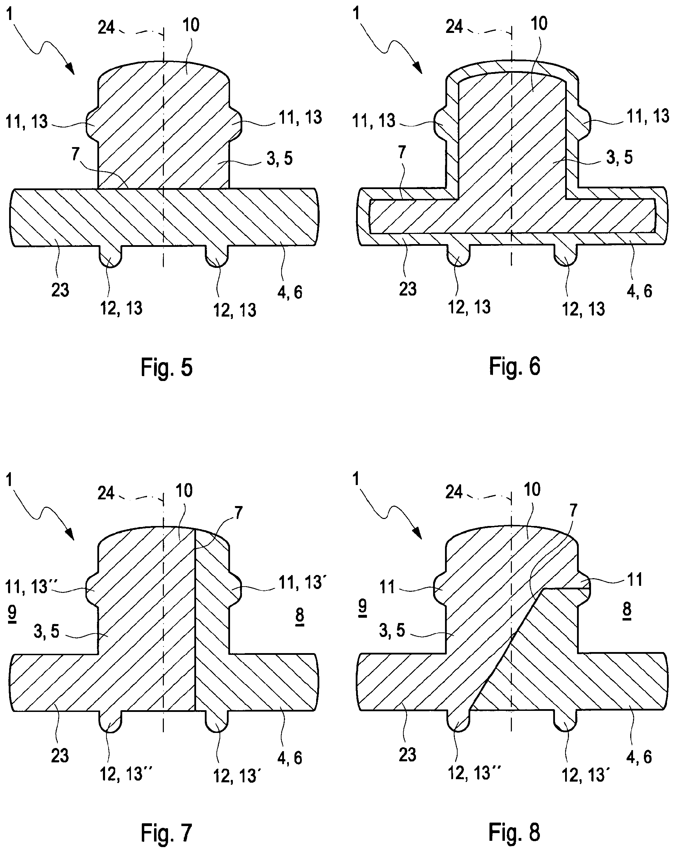

Die Fig. 4. bis Fig. 8 zeigen jeweils unterschiedliche Querschnittsprofile des Dichtungselementes 1 mit unterschiedlichen Verteilungen des ersten Bereiches 3 und des zweiten Bereiches 4.

Fig. 4 zeigt eine mögliche Verteilung, bei der der erste Bereich 3 zum zweiten Bereich 4 spiegelsymmetrisch ausgeformt ist. Die Grenze 7 verläuft durch eine Mittelachse 24 in Längsrichtung, wodurch sich eine Gleichverteilung des ersten Bereiches 3 und des zweiten Bereiches 4 einstellt. Bei dieser Verteilung der Bereiche, weisen der erste Bereich 3 und der zweite Bereich 4 als Dichtkonturen 13 jeweils eine Dichtlippe 12 und eine Wulst-artige Verdickung 11 auf.

In Fig. 5 ist ein Querschnittsprofil eines anderen Dichtungselementes 1 dargestellt, wobei der Grundkörper 23 des Dichtungselementes 1 sowie die Dichtlippen aus dem zweiten Bereich 4 mit dem zweiten Werkstoff 6 gebildet sind und die orthogonal auf dem Grundkörper 23 ausgeprägte Nase 10 sowie die wulstartigen Verdickungen 11 aus dem ersten Bereich 3 mit dem ersten Werkstoff 5 gebildet sind. Die Grenze 7, die eine Trennung der Bereiche 3, 4 beschreibt, verläuft somit zwischen dem Grundkörper 23 und der Nase 10.

Fig. 6 zeigt ein Querschnittsprofil eines Dichtungselementes 1, das im Inneren den ersten Bereich 3 mit dem ersten Werkstoff 5 aufweist und vollständig von Außen durch den zweiten Bereich 4 mit dem zweiten Werkstoff 6 umhüllt ist. Die Dichtkonturen 13, also sowohl die wulstartigen Verdickungen 11 als auch die Dichtlippen 12 sind ebenfalls aus dem zweiten Werkstoff 6 gebildet.

Fig. 7 zeigt eine parallel zur Mittelachse 24 zu einer Seite verschobene Grenze 7 zwischen dem ersten Bereich 3 und dem zweiten Bereich 4, wobei der zweite Bereich 4 vollumfänglich einseitig eine wulstartige Verdickung 11 und eine Dichtlippe 12 umfasst.

Fig. 8 zeigt eine bevorzugte Ausführungsform einer Verteilung des ersten Bereiches 3 und des zweiten Bereiches 4, wobei der zweite Bereich 4 einseitig die wulstartige Verdickung 11 bildet und sich zumindest teilweise in Richtung des Dichtungselementes 1 erstreckt und in einer Schräge zum Anfang der gegenüberliegenden Dichtlippe 12 ausläuft, die gegenüber der Mittelachse 24 geneigt ist.

Sofern das Dichtungselement 1 als geschlossene Ringdichtung 14 ausfgestaltet ist, umschließt sie den Innenbreich 8 und trennt bzw. dichtet diesem vom Außenbereich 9. Sofern zumindest zwei Dichtkonturen 13 in Reihe wirken, um den Innenbereich 8 gegenüber dem Außenbereich 9 zu dichten, kann die dem Innebreicht 8 ausgesetzte bzw. den Innenbereich 8 dichtende Dichtkontur 13 als innere Dichtkontur 13' bezeichnet werden, während die dem Außenbereich 9 ausgesetzte bzw. den Außenbereich 9 dichtende Dichtkontur 13 als äußere Dichtkontur 13" bezeichnet werden kann.

Die Fig. 4, 7 und 8 zeigen somit insbesondere jeweils eine Ausführungsform des Dichtungselemen3ts 1, bei der das Dichtungselement 1 eine in Umfangsrichtung 17 geschlossene Ringdichtung 14 ist, die den Innenbereich 8 einfasst, wobei das Dichtungselement 1 zumindest eine innere Dichtkontur 13' und zumindest eine äußere Dichtkontur 13", z.B. in Form von Dichtlippen 12 oder wulstartigen Verdickungen 11 aufweist, die in Richtung von abzudichtenden Fahrzeugbauteilkomponenten 20 hervorstehen, wobei die jeweilige innere Dichtkontur 13' zur Abdichtung des Innenbereiches 8 ausgestaltet ist, während die jeweilige äußere Dichtkontur 13" zur Abdichtung des der Außenkontur 15 zugewandten Außenbereiches 9 ausgestaltet ist, wobei die Grenze 7 zwischen dem ersten Bereich 3 und dem zweiten Bereich 4 im Querschnittsprofil des Dichtungselements 1 zwischen der inneren Dichtkontur 13' und der äußeren Dichtkontur 13" verläuft.

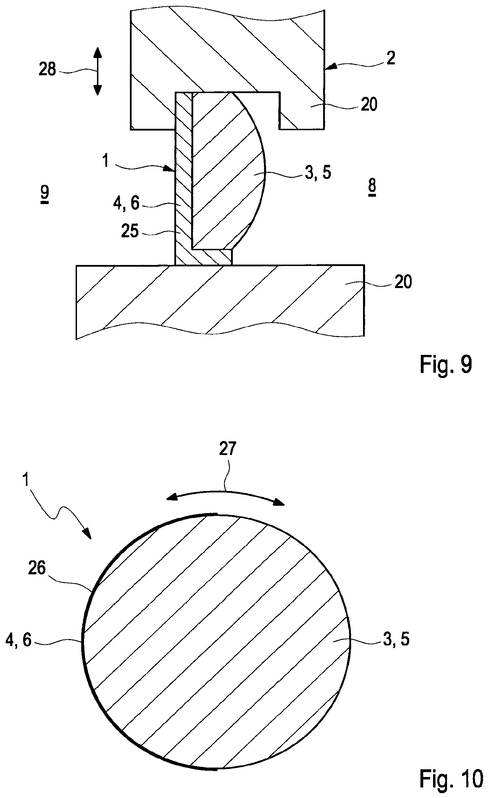

In Fig. 9 ist eine Ausführungsform gezeigt, bei der der zweite Bereich 4 durch eine Folie 25 gebildet ist, die außen am ersten Bereich 3 angeordnet ist. Die Folie 25 ist hier so angeordnet, dass sie einen axialen Kontakt mit dem einen, in Fig. 9 unteren Fahrzeugbauteil 20 erzeugt. In diesem Fall hat der erste Bereich 3 keinen Kontakt zu diesem unteren Fahrzeugbauteil 20. Im Unterschied dazu steht der erste Bereich 3 dichtend mit dem anderen, in Fig. 9 oberen Fahrzeugbauteil 20 in axialem Kontakt. Die Folie 25 kann optional quer zur Axialrichtung, insbesondere radial, am anderen bzw. oberen Fahrzeugbauteil 20 anliegen. Die Axialrichtung ist in Fig. 9 durch einen Pfeil 28 symbolisiert und entspricht hier der Richtung, in der sich die Fahrzeugbauteile 20 über das Dichtungselement 1 aneinander abstützen, um quer dazu den Innenbereich 8 vom Außenbereich 9 zu dichten.

Fig. 10 zeigt eine weitere Ausführungsform, bei der der zweite Bereich 4 durch eine Beschichtung 26 gebildet ist, die außen auf den ersten Bereich 3 aufgebracht ist. Im Beispiel der Fig. 10 erstreckt sich die Beschichtung 26 in der Profilumfangsrichtung 27 über mehr als 25% bzw. 90°, vorzugsweise etwa über 50% bzw. 180° des Gesamtumfangs des Querschnittprofils des Dichtungselements 1.

## Patentansprüche

1. Dichtungselement (1) zum Abdichten von Fahrzeugbauteilen (2) eines Kraftfahrzeugs, mit zumindest einem ersten Bereich (3) und einem zweiten Bereich (4), wobei der erste Bereich (3) aus einem ersten Werkstoff (5) und der zweite Bereich (4) aus einem zweiten Werkstoff (6) gebildet ist, der eine höhere chemische Beständigkeit als der erste Werkstoff (5) aufweist,
**dadurch gekennzeichnet,**
**dass** eine Verteilung des ersten Bereiches (3) und des zweiten Bereiches (4) im Querschnittsprofil des Dichtungselementes (1) in Längsrichtung variabel ist.

2. Dichtungselement nach Anspruch 1,
**dadurch gekennzeichnet,**
**dass** der erste Bereich (3) und der zweite Bereich (4) direkt aneinander angrenzen und miteinander verbunden sind.

3. Dichtungselement nach Anspruch 1 oder 2,
**dadurch gekennzeichnet,**
**dass** der zweite Werkstoff (6) aus der Gruppe Fluorsilicon-Kautschuk (FVMQ), Fluorkautschuk (FKM) und Hydrierter Acrylnitril-Butadien-Kautschuk (HNBR) ausgewählt ist.

4. Dichtungselement nach einem der Ansprüche 1 bis 3,
**dadurch gekennzeichnet,**
**dass** der erste Werkstoff (5) aus der Gruppe Ethylen-Acrylat-Kautschuk (AEM), Polyacrylat-Kautschuk (ACM), Methyl-Vinyl-Silikon-Kautschuk (MVQ), Acrylnitirl-Butadien-Kautschuk (NBR) und Ethylen-Propylen-Dien-Kautschuk (EPDM) ausgewählt ist.

5. Dichtungselement nach einem der Ansprüche 1 bis 4,
**dadurch gekennzeichnet,**
**dass** das Dichtungselement (1) eine in Umfangsrichtung (17) geschlossene Ringdichtung (14) ist.

6. Dichtungselement nach Anspruch 5,
**dadurch gekennzeichnet,**
**dass** eine Innenkontur (16) des Dichtungselementes (1), die einem vom als Ringdichtung (14) ausgestalteten Dichtungselement (1) eingefassten Innenbereich (8) zugewandt ist, durch den ersten Bereich (3) oder den zweiten Bereich (4) gebildet ist, während eine vom Innenbereich (8) abgewandte Außenkontur (15) des Dichtungselementes (1) durch den zweiten Bereich (4) oder den ersten Bereich (3) gebildet ist.

7. Dichtungselement nach einem der Ansprüche 1 bis 6,
**dadurch gekennzeichnet,**
- **dass** das Dichtungselement (1) im Querschnittsprofil an jeder Stelle in der Längsrichtung des Dichtungselementes (1) den ersten Bereich (3) und den zweiten Bereich (4) aufweist, oder
- **dass** das Dichtungselement (1) zumindest einen Längsabschnitt (21) aufweist, der ausschließlich aus dem ersten Werkstoff (5) des ersten Bereiches (3) oder dem zweiten Werkstoff (6) des zweiten Bereiches (4) gebildet ist.

8. Dichtungselement nach einem der Ansprüche 1 bis 7,
**dadurch gekennzeichnet,**
**dass** der erste Bereich (3) und der zweite Bereich (4) im Querschnittsprofil des Dichtungselementes (1) zumindest teilweise in Längsrichtung spiegelsymmetrisch ausgeformt sind und das vollständige Querschnittsprofil des Dichtungselementes (1) bilden.

9. Dichtungselement nach einem der Ansprüche 1 bis 8,
**dadurch gekennzeichnet,**
**dass** das Dichtungselement (1) Dichtkonturen (13), z.B. in Form von Dichtlippen (12), wulstartigen Verdickungen (11) oder Nasen (10) aufweist, die in Richtung von abzudichtenden Fahrzeugbauteilkomponenten (20) hervorstehen.

10. Dichtungselement nach Anspruch 9,
**dadurch gekennzeichnet,**
**dass** die Dichtkonturen (13) einen Bestandteil des in Längsrichtung konstanten Querschnittsprofiles des Dichtungselementes (1) bilden.

11. Dichtungselement nach einem der Ansprüche 1 bis 10,
**dadurch gekennzeichnet,**
**dass** bei einem als Ringdichtung (14) ausgestalteten Dichtungselementes (1) Dichtkonturen (13) zur Abdichtung des Innenbereiches (8) und Dichtkonturen (13) zur Abdichtung eines der Außenkontur (15) zugewandten Außenbereiches (9) ausgestaltet sind.

12. Dichtungselement nach einem der Ansprüche 9 bis 11,
**dadurch gekennzeichnet,**
**dass** eine Grenze (7) zwischen dem ersten Bereich (3) und dem zweiten Bereich (4) im Querschnittsprofil des Dichtungselements (1) zwischen den Dichtkonturen (13) zur Abdichtung des Innenbereiches (8) sowie den Dichtkonturen (13) zur Abdichtung des Außenbereiches (9) verläuft.

13. Dichtungselement nach einem der vorhergehenden Ansprüche,
**dadurch gekennzeichnet,**
- **dass** das Dichtungselement (1) eine in Umfangsrichtung (17) geschlossene Ringdichtung (14) ist, die einen Innenbereich (8) einfasst,
- **dass** das Dichtungselement (1) innere und äußere Dichtkonturen (13', 13"), z.B. in Form von Dichtlippen (12), wulstartigen Verdickungen (11) oder Nasen (10) aufweist, die in Richtung von abzudichtenden Fahrzeugbauteilkomponenten (20) hervorstehen,
- **dass** die jeweilige innere Dichtkontur (13') zur Abdichtung des Innenbereiches (8) ausgestaltet ist, während die jeweilige äußere Dichtkontur (13") zur Abdichtung eines der Außenkontur (15) zugewandten Außenbereiches (9) ausgestaltet ist,
- **dass** eine Grenze (7) zwischen dem ersten Bereich (3) und dem zweiten Bereich (4) im Querschnittsprofil des Dichtungselements (1) zwischen der inneren Dichtkontur (13') und der äußeren Dichtkontur (13") verläuft.

14. Dichtungselement nach einem der vorhergehenden Ansprüche,
**dadurch gekennzeichnet,**
**dass** zumindest ein solcher zweiter Bereich (4) durch eine Folie (25) gebildet ist, die außen am ersten Bereich (3) angeordnet ist.

15. Dichtungselement nach einem der vorhergehenden Ansprüche,
**dadurch gekennzeichnet,**
**dass** zumindest ein solcher zweiter Bereich (4) durch eine Beschichtung (26) gebildet ist, die außen auf den ersten Bereich (3) aufgebracht ist.

## Claims

1. A sealing element (1) for sealing vehicle components (2) of a motor vehicle, having at least one first region (3) and one second region (4), wherein the first region (3) is formed from a first material (5) and the second region (4) is formed from a second material (6), which has a higher chemical resistance than the first material (5),
**characterized in that**
a distribution of the first region (3) and of the second region (4) in the cross-sectional profile of the sealing element (1) is variable in longitudinal direction.

2. The sealing element according to claim 1,
**characterized in that**
the first region (3) and the second region (4) directly adjoin one another and are connected with one another.

3. The sealing element according to claim 1 or 2,
**characterized in that**
the second material (6) is selected from the group fluorosilicone rubber (FVMQ), fluororubber (FKM) and hydrogenated acrylonitrile butadiene rubber (HNBR).

4. The sealing element according to one of claims 1 to 3,
**characterized in that**
the first material (5) is selected from the group ethylene acrylate rubber (AEM), polyacrylate rubber (ACM), methyl-vinyl silicone rubber (MVQ), acrylonitrile butadiene rubber (NBR) and ethylene propylene diene rubber (EPDM).

5. The sealing element according to one of claims 1 to 4,
**characterized in that**
the sealing element (1) is a ring seal (14) which is closed in circumferential direction (17).

6. The sealing element according to claim 5,
**characterized in that**
an inner contour (16) of the sealing element (1), which faces an inner region (8), surrounded by the sealing element (1) configured as ring seal (14), is formed by the first region (3) or the second region (4), whereas an outer contour (15) of the sealing element (1), facing away from the inner region (8), is formed by the second region (4) or the first region (3) .

7. The sealing element according to one of claims 1 to 6,
**characterized in that**
- the sealing element (1) has in the cross-sectional profile at each site in the longitudinal direction of the sealing element (1) the first region (3) and the second region (4), or
- the sealing element (1) has at least one longitudinal portion (21), which is formed exclusively from the first material (5) of the first region (3) or from the second material (6) of the second region (4).

8. The sealing element according to one of claims 1 to 7,
**characterized in that**
the first region (3) and the second region (4) in the cross-sectional profile of the sealing element (1) are formed mirror-symmetrically at least partially in longitudinal direction, and form the complete cross-sectional profile of the sealing element (1).

9. The sealing element according to one of claims 1 to 8,
**characterized in that**
the sealing element (1) has sealing contours (13), e.g. in the form of sealing lips (12), bead-like thickenings (11) or noses (10), which project in the direction of vehicle component parts (20) which are to be sealed.

10. The sealing element according to claim 9,
**characterized in that**
the sealing contours (13) form a component of the cross-sectional profile of the sealing element (1) which is constant in longitudinal direction.

11. The sealing element according to one of claims 1 to 10,
**characterized in that**
with a sealing element (1) configured as ring seal (14), sealing contours (13) are configured for sealing the inner region (8), and sealing contours (13) are configured for sealing an outer region (9) facing the outer contour (15).

12. The sealing element according to one of claims 9 to 11,
**characterized in that**
a boundary (7) runs between the first region (3) and the second region (4) in the cross-sectional profile of the sealing element (1) between the sealing contours (13) for sealing the inner region (8) and the sealing contours (13) for sealing the outer region (9) .

13. The sealing element according to one of the preceding claims,
**characterized in that**
- the sealing element (1) is a ring seal (14), closed in circumferential direction (17), which surrounds an inner region (8),
- the sealing element (1) has inner and outer sealing contours (13', 13"), e.g. in the form of sealing lips (12), bead-like thickenings (11) or noses (10), which project in the direction of vehicle component parts (20) which are to be sealed,
- the respective inner sealing contour (13') is configured for sealing the inner region (8), whereas the respective outer sealing contour (13") is configured for sealing an outer region (9) facing the outer contour (15),
- a boundary (7) runs between the first region (3) and the second region (4) in the cross-sectional profile of the sealing element (1) between the inner sealing contour (13') and the outer sealing contour (13").

14. The sealing element according to one of the preceding claims,
**characterized in that**
at least one such second region (4) is formed by a film (25), which is arranged externally on the first region (3).

15. The sealing element according to one of the preceding claims,
**characterized in that**
at least one such second region (4) is formed by a coating (26), which is applied externally onto the first region (3).

## Revendications

1. Élément d'étanchéité (1) destiné à étanchéifier des composants de véhicule (2) d'un véhicule automobile, avec au moins une première zone (3) et une seconde zone (4), dans lequel la première zone (3) est formée à partir d'un premier matériau (5) et la seconde zone (4) d'un second matériau (6) qui présente une résistance chimique supérieure au premier matériau (5),
**caractérisé en ce qu'**
**en ce qu'**une répartition de la première zone (3) et de la seconde zone (4) dans le profil en section transversale de l'élément d'étanchéité (1) est variable dans la direction longitudinale.

2. Élément d'étanchéité selon la revendication 1,
**caractérisé en ce que**
la première zone (3) et la seconde zone (4) sont directement contigues l'une par rapport à l'autre et reliées entre elles.

3. Élément d'étanchéité selon la revendication 1 ou 2,
**caractérisé en ce que**
le second matériau (6) est choisi dans le groupe caoutchouc fluorosilicone (FVMQ), caoutchouc fluoré (FKM) et caoutchouc acrylonitrile-butadiène hydrogéné (HNBR).

4. Élément d'étanchéité selon l'une quelconque des revendications 1 à 3,
**caractérisé en ce que**
le premier matériau (5) est choisi dans le groupe du caoutchouc éthylène-acrylate (AEM), caoutchouc polyacrylate (ACM), caoutchouc polyvinylique-silicone (MVQ), caoutchouc acrylonitrile-butadiène (NBR) et caoutchouc éthylène-propylène-diène (EPDM).

5. Élément d'étanchéité selon l'une quelconque des revendications 1 à 4,
**caractérisé en ce que**
l'élément d'étanchéité (1) est un joint annulaire (14) fermé dans la direction circonférentielle (17).

6. Élément d'étanchéité selon la revendication 5,
**caractérisé en ce qu'**
un contour intérieur (16) de l'élément d'étanchéité (1), qui est tourné vers une zone intérieure (8) entourée par l'élément d'étanchéité (1) conçu comme un joint annulaire (14), est formé par la première zone (3) ou la seconde zone (4), pendant qu'un contour extérieur (15) de l'élément d'étanchéité (1) faisant face à la zone intérieure (8) est formé par la seconde zone (4) ou la première zone (3).

7. Élément d'étanchéité selon l'une quelconque des revendications 1 à 6,
**caractérisé en ce que**
- l'élément d'étanchéité (1) présente la première zone (3) et la seconde zone (4) dans le profil en section transversale à chaque point dans la direction longitudinale de l'élément d'étanchéité (1), ou
- l'élément d'étanchéité (1) présente au moins une section longitudinale (21), qui est formée exclusivement à partir du premier matériau (5) de la première zone (3) ou du second matériau (6) de la seconde zone (4).

8. Élément d'étanchéité selon l'une quelconque des revendications 1 à 7,
**caractérisé en ce que**
la première zone (3) et la seconde zone (4) dans le profil en section transversale de l'élément d'étanchéité (1) sont façonnées de façon symétrique par réflexion au moins partiellement dans la direction longitudinale et forment le profil en section transversale complet de l'élément d'étanchéité (1).

9. Élément d'étanchéité selon l'une quelconque des revendications 1 à 8,
**caractérisé en ce que**
l'élément d'étanchéité (1) présente des contours d'étanchéité (13), par exemple sous la forme de lèvres d'étanchéité (12), d'épaississements (11) en bourrelets ou d'ergots (10), qui dépassent dans la direction des composants structuraux de véhicule (20) à étanchéifier.

10. Élément d'étanchéité selon la revendication 9,
**caractérisé en ce que**
les contours d'étanchéité (13) forment un élément constitutif du profil transversal constant dans la direction longitudinale de l'élément d'étanchéité (1).

11. Élément d'étanchéité selon l'une quelconque des revendications 1 à 10,
**caractérisé en ce que**
dans le cas d'un élément d'étanchéité (1) conçu comme un joint annulaire (14), des contours d'étanchéité (13) sont conçus pour étanchéifier la zone intérieure (8) et des contours d'étanchéité (13) pour étanchéifier une zone extérieure (9) faisant face au contour extérieur (15).

12. Élément d'étanchéité selon l'une quelconque des revendications 9 à 11,
**caractérisé en ce qu'**
une limite (7) s'étend entre la première zone (3) et la seconde zone (4) dans le profil transversal de l'élément d'étanchéité (1) entre les contours d'étanchéité (13) pour l'étanchéification de l'intérieur (8) ainsi que les contours d'étanchéité (13) pour l'étanchéification de la zone extérieure (9).

13. Élément d'étanchéité selon l'une quelconque des revendications précédentes,
**caractérisé en ce que**
- l'élément d'étanchéité (1) est un joint annulaire (14) fermé dans la direction circonférentielle (17), qui comprend une zone intérieure (8),
- l'élément d'étanchéité (1) présente des contours d'étanchéité intérieurs et extérieurs (13', 13"), par exemple sous la forme de lèvres d'étanchéité (12), d'épaississements (11) en bourrelets ou d'ergots (10), qui dépassent dans la direction de composants structuraux de véhicule à étanchéifier (20),
- le contour d'étanchéité intérieur (13') respectif est conçu pour l'étanchéification de la zone intérieure (8), pendant que le contour d'étanchéité extérieur (13") respectif est conçu pour étanchéifier une zone extérieure (9) faisant face au contour extérieur (15),
- une limite (7) s'étend entre la première zone (3) et la seconde zone (4) dans le profil en section transversale de l'élément d'étanchéité (1) entre le contour d'étanchéité intérieur (13) et le contour d'étanchéité extérieur (13").

14. Élément d'étanchéité selon l'une quelconque des revendications précédentes,
**caractérisé en ce qu'**
au moins une telle seconde zone (4) est formée par un film (25) qui est agencé à l'extérieur au niveau de la première zone (3).

15. Élément d'étanchéité selon l'une quelconque des revendications précédentes,
**caractérisé en ce qu'**
au moins une seconde zone (4) est formée par un revêtement (26) qui est appliqué à l'extérieur sur la première zone (3).
